# EUROPÄISCHE PATENTSCHRIFT

(11) **EP 3 176 448 B1**
(45) Veröffentlichungstag und Bekanntmachung des Hinweises auf die Patenterteilung: **21.03.2018**
(21) Anmeldenummer: 15197461.5
(22) Anmeldetag: 02.12.2015
(51) Int. Cl.: F16B 43/00, F16B 19/02

(54) **VERBINDUNGSELEMENT**
CONNECTING ELEMENT
ÉLÉMENT DE LIAISON

(43) Veröffentlichungstag der Anmeldung: 07.06.2017
(73) Patentinhaber: Friedrich Ossenberg-Schule GmbH + Co. KG, 58675 Hemer (DE)
(72) Erfinder:
(74) Vertreter: Köchling, Conrad-Joachim

(56) Entgegenhaltungen:
- DE-U1- 7 908 012
- DE-U1- 9 410 772

## Beschreibung

Die Erfindung betrifft ein Verbindungselement, zur abgedichteten Verbindung und Befestigung von Gegenständen, bestehend aus einem stiftförmigen Verbindungsmittel, mit einem Schaft und einem Kopf, und einem auf dem Schaft angeordneten Dichtungsmittel.

Um Gegenstände abgedichtet zu verbinden oder zu befestigen, insbesondere im Arbeitsgebiet des Dachdeckerhandwerks, sind im Stand der Technik als Verbindungselemente Schrauben mit einer auf dem Schraubenschaft angeordneten durchmessergroßen Metallscheibe und einer durchmessergroßen Dichtscheibe bekannt. Die Metallscheibe ist zwischen dem Schraubenkopf und der Dichtscheibe angeordnet. Zum Verbinden oder Befestigen, beispielsweise von Dachplatten an einer Holzunterkonstruktion, wird die Schraube durch eine Lochung einer Dachplatte gesteckt und in die Holzunterkonstruktion eingeschraubt. Beim Anziehen der Schraube übt der Schraubenkopf Druck auf die Metallscheibe aus, welche somit die Dichtscheibe fest auf die Dachplatte im Bereich der Lochung und den die Lochung umgebenden Plattenbereich presst und so einen Feuchtigkeitseintritt in das Loch verhindert. Die Abdichtung erfolgt dabei ausschließlich zwischen Dichtscheibe und Dachplatte. Die Metallscheibe und die Dichtscheibe müssen einen gegenüber der Lochung größeren Durchmesser aufweisen, damit diese in einem die Lochung umgebenden Plattenbereich aufliegen und in diesem Bereich für eine Abdichtung sorgen.
Solche Schrauben werden beispielsweise zur Befestigung von Dach- oder Fassadenplatten eingesetzt.

Ungleichmäßige Löcher, bei denen beispielsweise der Randbereich des Loches ausgebrochen oder uneben ist oder während des Einschraubens ausbricht, können nicht sicher abgedichtet werden. Die Dichtscheibe deckt in diesem Fall möglicherweise nicht mehr die gesamte Lochung ab und liegt auch nicht mehr plan auf der Platte und dem Randbereich des Loches auf, sodass die Dichtscheibe nicht gleichmäßig angedrückt wird. Feuchtigkeit kann dann durch Spalte zwischen der Dichtscheibe und der Auflagefläche eindringen.

Werden die Verbindungsmittel zur Befestigung von Teilen an oder zur Verbindung von Teilen mit Holzgegenständen, wie beispielsweise zum Befestigen von Dachplatten an Dachlatten eingesetzt, kommt es vor, dass die Holzkonstruktionen schwinden und der Anpressdruck der Schraube nachlässt, sodass die Dichtscheibe nach einiger Zeit nicht ausreichend dicht auf die Auflagefläche gepresst wird und das Eindringen von Feuchtigkeit zulässt.

Durch den mehrschichtigen relativ dicken Aufbau der bekannten Verbindungsmittel, ragen diese erheblich über die Oberfläche der zu verbindenden Gegenstände hervor, was nachteilig ist, wenn weitere Bauteile eng aufliegend montiert werden müssen, wie beispielsweise bei schuppenartiger Verlegung von Dachplatten. Durch die Metallscheibe entstehen außerdem zusätzliche Kosten. Weitere relevante Verbindungselemente sind aus der DE 94 10 772 U sowie der DE 79 08 012 U bekannt.

Ausgehend von diesem Stand der Technik liegt der Erfindung die Aufgabe zu Grunde, ein langlebiges Verbindungselement mit in Montagesolllage flachem Aufbau zu schaffen, das geeignet ist, eine sichere, dauerhafte und kostengünstige Abdichtung von Lochungen von Verbindungs- oder Befestigungsteilen auch bei unebenen Lochwandungen und ungleichmäßigen Randbereichen zu gewährleisten.
Zur Lösung dieser Aufgabe wird vorgeschlagen, dass das Dichtungsmittel eine Hülse aus elastomerem Material ist, die einen zylindrischen Durchgangskanal aufweist, der vom Schaft durchgriffen ist, dass die Hülse über ihre Länge unterschiedliche Wandstärke aufweist, nämlich an den Enden eine geringere Wandstärke als im Bereich zwischen ihren Enden.

Beim Verbinden bzw. Befestigen von Gegenständen entsteht in dem Gegenstand durch das Verbindungsmittel ein Loch, beispielsweise durch das Durchdringen des Schaftes des Verbindungsmittels, z.B. einer Schraube oder eines Nagels, oder es sind bereits Löcher in dem zu befestigenden Gegenstand vorgefertigt, durch die der Schaft des Verbindungsmittels gesteckt werden kann. Das Verbindungsmittel dringt zuerst mit seiner Spitze und nachfolgend mit dem Schaft in den Gegenstand oder die Lochung ein. Auf dem Schaft, nahe dem Kopf, befindet sich die Hülse, deren Ende nach einer gewissen Eindringtiefe des Verbindungsmittels das Loch erreicht und in dieses eindringt. Das zuerst eindringende Ende der Hülse weist eine geringere Wandstärke auf als der Bereich zwischen ihren Enden, wodurch das Eindringen der Hülse in das Loch erleichtert ist. Die Hülse wird beim Eintreiben des Schaftes durch den Druck des Kopfes auf das kopfnahe Ende teilweise, z.B. etwa bis zur Hälfte ihrer Länge, in das Loch gedrückt, wobei sich die Hülse mit dem Bereich zwischen ihren Enden im Mündungsbereich des Loches und an der Lochlaibung abstützt und das elastomere Material komprimiert und fest an die Laibung des Loches gedrückt wird und somit das Loch sicher abdichtet. Die Hülse steckt mit dem Bereich größerer Wandstärke fest in dem Loch, während der andere Bereich, insbesondere das kopfnahe Ende der Hülse, aus dem Loch hervorsteht und durch den Druck des Kopfes beim Eintreiben des Verbindungsmittels verformt und in Richtung des Kopfes umgestülpt wird, sodass das umgestülpte Ende mit dem Kopf in Endmontagelage neben der Mündung des Loches positioniert ist und auf dem Plattenmaterial neben der Lochung aufliegt und somit den Lochbereich verschließt. Die geringe Wandstärke der Hülse am Kopfende erleichtert die Umstülpung dieses Hülsenbereiches.
Hierdurch wird ein Verbindungselement bereitgestellt, welches nicht nur die Mündung des Loches oberseitig abdeckt und verschließt, sondern auch mit dem in dem Loch steckenden dickeren Bereich der Hülse innerhalb des Loches abdichtet. Das elastomere Material ermöglicht auch die Abdichtung ungleichmäßiger Öffnungen, deren Randbereiche ausgebrochen sind, wobei sich der in das Loch eingeführte dickere Bereich der elastomeren Hülse auch an eine ausgebrochene Lochwandung oder -laibung anpasst und ausgebrochene Bereiche ausfüllt und diese sicher abdichtet.
Wird das Verbindungselement zur Verbindung von Gegenständen an Holzunterkonstruktionen verwendet, wie es beispielsweise bei der Befestigung von Dachplatten an Dachlatten der Fall ist, führt eine temperatur- oder witterungsbedingte Schwindung des Holzwerkstoffes zwar zu einem verringerten Anpressdruck der Schraube, jedoch ist durch das in dem Loch sitzende elastomere Material die Abdichtung innerhalb des Loches an der Lochlaibung weiter sichergestellt, sodass keine Feuchtigkeit in das Loch eindringen kann.
Bei dieser Lösung kann auf eine zusätzliche Metallscheibe verzichtet werden, was eine Kostenersparnis zur Folge hat und einen flacheren Aufbau ermöglicht, weil der Kopf des Verbindungsmittels bündig oder annähernd bündig mit der Oberfläche des befestigten Teils abschließen kann.
Ein weiterer Vorteil besteht darin, dass das Verbindungselement an vorgelochten Befestigungsmitteln, wie Klammern, beispielsweise Dachklammern oder Firstklammern, vormontiert werden kann. Die elastomere Hülse kann mit dem Verbindungsmittel durch die Lochung des Befestigungsmittels hindurch gesteckt werden und das Verbindungsmittel ist zwischen dem verdickten Bereich der Hülse einerseits und dem Kopf des Verbindungsmittels andererseits verliersicher gehalten.

Unter Umständen ist bevorzugt vorgesehen, dass das stiftförmige Verbindungsmittel ein Nagel ist.

Verbindungmittel wie Nägel kommen beispielsweise zum Einsatz, wenn Dachplatten auf der Holzunterkonstruktion eines Daches befestigt werden sollen. Die Dachplatte weist vorzugsweise ein vorgefertigtes Loch auf, durch das der Nagel samt Hülsenende eingeführt ist. Die Vormontage der Nägel samt Hülsen ist bei vorgefertigten Löchern ebenfalls denkbar. Dazu können die Nägel samt Hülsen in Löcher in der Dachplatte eingesteckt und festgedrückt werden, sodass sie verliersicher in dem Loch gehalten sind. Bei der Befestigung der Dachplatte an der Holzunterkonstruktion können dann die Nägel in die Holzunterkonstruktion eingetrieben werden.

Bevorzugt ist vorgesehen, dass das stiftförmige Verbindungsmittel eine Schraube ist.

Eine Schraube ist vorteilhaft beispielsweise zur Befestigung einer Dachplatte auf der Holzlattung, wobei die Dachplatte ein vorgefertigtes Loch aufweist, durch das die Schraube durchgeführt und in das die Hülse mit ihrem Ende eingeführt ist. Durch Verschraubung mit der Holzlattung wird die Schraube in das Loch der Dachplatte gezogen, wobei der Kopf die Hülse teilweise in das Loch gedrückt wird. Der aus dem Loch hervorstehende dünnwandige Teil der Hülse wird durch den Druck des Kopfes umgestülpt und dichtet mit dem Kopf die Mündung des Loches ab.

Bevorzugt ist vorgesehen, dass die Schraube im dem Kopf nahem Bereich einen gewindelosen Teil oder Bereich aufweist und zwar in einer Länge die gleich oder größer ist als die Hülsenlänge.

Während die Schraube bis zum Erreichen der Endlage immer weiter in das Material eindringt, dringt die Hülse nur teilweise in das Loch ein, etwa bis sie mit dem Bereich größerer Wandstärke zwischen den Enden in dem Loch sitzt. Dabei ist vorteilhaft, dass die Hülse auf dem glatten, gewindelosen Teil der Schraube sitzt, da die Schraube unabhängig von der Hülse drehbewegbar bleibt und in Endlage geschraubt werden kann, wobei die Hülse in ihrer Position verharrt und nicht oder nur geringfügig auf dem gewindelosen Bereich mitdreht.

Um das Loch sicher abzudichten soll die Hülse gleichmäßig in das Loch eindringen und in dem Loch an der Lochlaibung anliegend sitzen. Durch den gewindelosen Teil ist sichergestellt, dass die Hülse nicht auf dem Gewinde mitdreht und ungleichmäßig verdreht wird und so in das Loch gedrückt wird.

Zudem ist vorzugsweise vorgesehen, dass das Gewinde der Schraube über den gewindelosen Teil radial vorragt und zumindest das dem Gewinde benachbarte mit der geringeren Wandstärke versehene Ende der Hülse oder auch das dem Kopf benachbarte Ende der Hülse eine solche Wandstärke hat, dass der Außenmantel des Hülsenendes mit dem Gewinde fluchtet.

Dadurch ergibt sich der Vorteil, dass die Hülse leichter mit dem an das Gewinde angrenzenden Ende in die Lochung eintauchen kann. Das Gewinde gibt dabei die Größe der Lochung vor, welche aufgrund der fluchtenden Mantelfläche so groß ist, dass das Ende der Hülse ohne großen Druck in das Loch gleitet, bis sich die Wandstärke der Hülse verdickt und die Hülse stecken bleibt. Die Hülse dringt dann ggf. noch tiefer in das Loch ein, wobei der von dem Kopf ausgeübte Druck auf das kopfnahe Ende fortwirkt und dieses umstülpt. Fluchtet auch der Außenmantel des dem Kopf benachbarten Endes mit dem Gewinde, liegt eine ausreichend geringere Materialstärke vor, sodass sich das Ende beim Einschrauben optimal umstülpen kann. Bei zu geringer Materialstärke erfolgt die Umstülpung möglicherweise zu früh und die Hülse wird nicht weit genug in das Loch eingedrückt, bei zu großer Materialstärke zu spät oder gar nicht.
Ein weiterer Vorteil bietet sich dadurch, dass der zylindrische Durchgangskanal der Hülse, die auf dem gewindelosen Teil der Schraube sitzt, einen geringeren Innendurchmesser aufweist als die Schraube im mit Gewinde versehenen Bereich. Das ermöglicht die Vormontage der Hülse auf der Schraube. Dazu kann die Hülse aufgrund des elastomeren Materials mit geringem Kraftaufwand über das Gewinde geschoben werden, bis sie auf dem gewindelosen Teil sitzt. Da der Durchgangskanal der Hülse bei einer solchen Ausgestaltung einen geringeren Innendurchmesser aufweist als die Schraube im Gewindebereich, wird die Hülse durch das Gewinde gestoppt und ist verliersicher zwischen Kopf und Gewindeanfang gehalten.

Auch kann bevorzugt vorgesehen sein, dass die Hülse im Längsschnitt ballig ist.

Alternativ kann vorgesehen sein, dass die Hülse trapezballig ist.

Auch kann alternativ vorgesehen sein, dass die Hülse im Längsschnitt elliptisch ist oder im Längsschnitt einen sich zu den Enden hin verjüngenden Doppelkonus bildet.

Diese Formen eignen sich vorzüglich für eine erfindungsgemäße Hülse. Sie ermöglichen durch ihre dünnwandigen schlanken Enden ein leichtes Einführen des einen Endes der Hülse und eine gute Stülpfähigkeit des anderen Endes der Hülse. Der bei allen Formen bestehende verdickte Bereich mit größerer Wandstärke zwischen den Enden passt sich den entsprechenden Lochungen bzw. Lochlaibungen optimal an und dichtet diese sicher ab.

Als weitere Alternative kann vorzugsweise vorgesehen sein, dass die Hülse im Längsschnitt von den Enden zum Bereich zwischen den Enden stufenartig verdickt ist, wobei vorzugsweise vorgesehen ist, dass mindestens eine Stufe eine abgerundete oder abgeschrägte Kante aufweist.

Die Vorteile der vorbezeichneten Formen gelten dabei ebenfalls. Durch die Abrundung oder Abschrägung mindestens der in Einführungsrichtung ersten Stufe, gleitet die Hülse leichter in die Lochung.

Auch ist bevorzugt vorgesehen, dass die Hülse mit Bewegungsspiel auf dem Schaft angeordnet ist.

Das ermöglicht eine unabhängige Bewegung von Hülse und Verbindungsmittel. Sobald die Hülse fest in dem Loch sitzt, kann das Verbindungsmittel ohne großen Aufwand unabhängig von der Hülse weiter in das Material eingetrieben und in Endmontagelage bewegt werden, ohne dass die Hülse die Bewegung durch zu enges Anliegen am Schaft behindert.
Um die Umstülpung zu gewährleisten ist eine Bewegung in axialer Richtung zum Schaft vorteilhaft. Dazu bewegt sich die Hülse bei der Montage auf dem Schaft in Richtung zum Kopf, wo sie sich an der Unterseite des Kopfes verformt und umstülpt. Ist das Verbindungsmittel eine Schraube, ist der Durchmesser des Durchgangskanals der Hülse so zu wählen, dass die Hülse locker auf dem Schaft sitzt. So ist gewährleistet, dass sich die Hülse an der Innenwand eines Loches abstützen kann und die Hülse nicht durch das Gewinde der Schraube in das Loch hineingezogen wird.

Bevorzugt ist vorgesehen, dass der Kopf radial außen umlaufend eine zum Schaft hin vorragende Kante aufweist. Alternativ kann vorgesehen sein, dass die Unterseite des Kopfes eine umlaufende Nut oder Rille aufweist.

Dadurch wird erreicht, dass sich das kopfnahe Ende der Hülse beim Eintreiben des Verbindungsmittels zum Kopf hin bewegt und durch die an der Kopfunterseite vorgesehenen Ausbildungen der Umstülpungsvorgang des Hülsenendes eingeleitet und ausgeführt wird.

Es ist bevorzugt vorgesehen, dass der Kopf wahlweise nach Art eines Linsenkopfes oder eines Versenkkopfes ausgebildet ist.

Der Linsenkopf führt zu einem nur geringen Überstand in der Montagesolllage.
Der Versenkkopf eignet sich für Verbindungen oder Befestigungen, bei denen eine im Wesentlichen bündige Anordnung zum gelochten Gegenstand bzw. zu dessen Oberseite erforderlich ist.

Es ist vorzugsweise vorgesehen, dass der Kopf auf seiner dem Schaft abgewandten Stirnseite eine Eingriffskontur für ein Schraubwerkzeug aufweist.

Dadurch ist in einfacher Weise die Befestigung und Verbindung mittels üblicher Schraubwerkzeuge ermöglicht.

Ein Ausführungsbeispiel eines erfindungsgemäßen Verbindungselements ist in der Zeichnung dargestellt und im Folgenden näher beschrieben.

Es zeigt:
- Fig. 1: eine Ausführungsvariante des erfindungsgemäßen Verbindungselementes im Längsschnitt;
- Fig. 2: eine Ausführungsvariante des erfindungsgemäßen Verbindungselements in Vormontagelage;
- Fig. 3: eine Ausführungsvariante des erfindungsgemäßen Verbindungselements in Montageendlage;
- Fig. 4: das Verbindungselement im Längsschnitt in Endmontagelage mit einem umgestülpten Hülsenende;
- Fig. 5: das Verbindungselement in einem vormontierten Zustand auf einem Befestigungsmittel;
- Fig. 6: das Detail B der Fig. 1 in vergrößertem Maßstab.

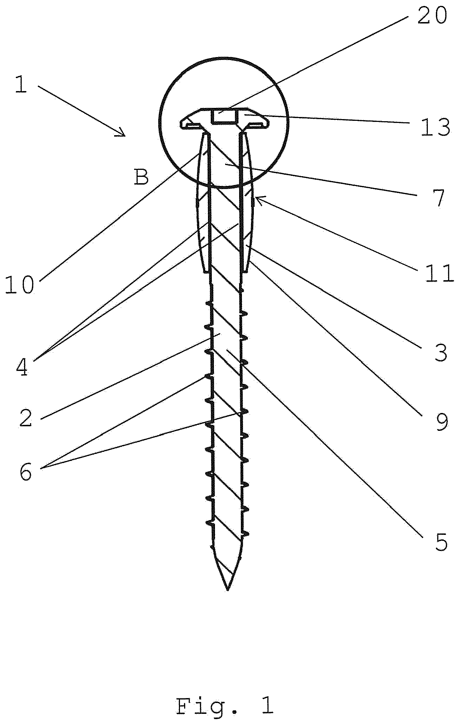

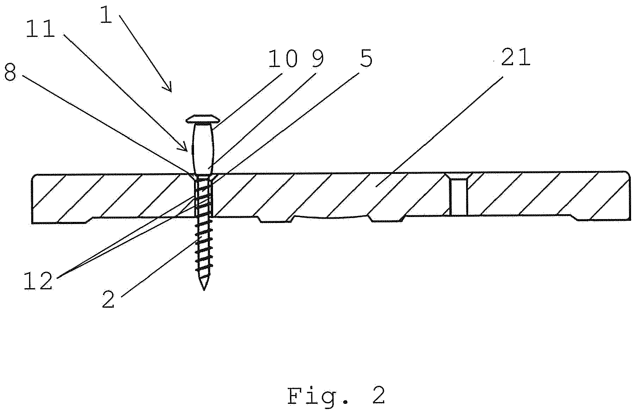

Fig. 1 zeigt eine Ausführungsvariante des erfindungsgemäßen Verbindungselementes 1 im Längsschnitt, nämlich ein stiftförmiges Verbindungsmittel 2 und eine Hülse 3 aus elastomerem Material, die einen zylindrischen Durchgangskanal 4 aufweist, der vom Schaft 5 des Verbindungsmittels 2 durchgriffen ist.
Das stiftförmige Verbindungsmittel 2 ist eine Schraube mit Gewinde 6, wobei die Hülse 3 mit Bewegungsspiel auf einem gewindelosen, glatten Teil 7 des Schaftes 5 sitzt, der eine Länge aufweist, die etwa der Hülsenlänge entspricht und der zwischen einem Kopf 13 und dem Anfang des Gewindes 6 ausgebildet ist.
Das Gewinde 6 der Schraube ragt über den gewindelosen Teil 7 radial vor. Beide Enden 9, 10 der Hülse 3 weisen eine solche im Vergleich zu dem Bereich zwischen den Enden 11 verjüngte Wandstärke auf, dass der Außenmantel der Enden 9, 10 mit dem Gewinde 6 fluchtet. Dadurch ergibt sich der Vorteil, dass die Hülse 3, wie in Fig. 2 gezeigt, mit dem an das Gewinde 6 angrenzenden Ende 9 leichter in ein Loch 8 eines zu befestigenden Teils, z.B. einer Dachplatte 21 eintauchen kann.

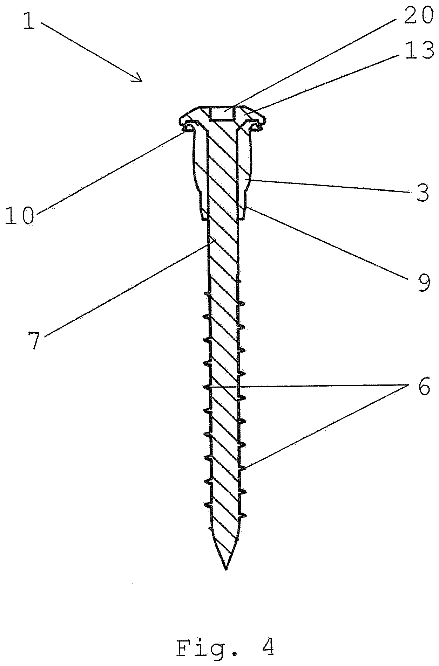

Ein weiterer Vorteil bietet sich dadurch, dass der zylindrische Durchgangskanal 4 der Hülse 3, die auf dem gewindelosen Teil 7 der Schraube sitzt, einen geringeren Innendurchmesser aufweist als die Schraube im Bereich des Gewindes. Das ermöglicht die Vormontage der Hülse 3 auf der Schraube. Die Hülse 3 kann aufgrund der Dehnbarkeit des elastomeren Materials mit geringem Kraftaufwand über das Gewinde 6 auf den gewindelosen Teil 7 des Schaftes 5 geschoben werden, wo sie dann aufgrund des geringeren Innendurchmessers des Durchgangskanals 4 gegenüber der Schraube durch das Gewinde 6 in axialer Richtung gehalten ist und zwischen dem Kopf 13 und Gewinde 6 verliersicher gehalten ist. Auch der Außenmantel des kopfnahen Endes 10 der Hülse 3 fluchtet mit dem Gewinde 6, wodurch eine ausreichend geringe Materialstärke vorliegt, sodass sich das Ende 10 beim Einschrauben umstülpen kann, wie in Fig. 4 veranschaulicht ist.

Fig. 2 zeigt das Verbindungselement 1 in Vormontagelage. Der Schaft 5 des Verbindungsmittels 2 ist teilweise in ein vorgefertigtes Loch 8 der Dachplatte 21 eingeschoben, und das dem Gewinde 6 benachbarte Ende 9 der Hülse 3 befindet sich unmittelbar vor der Mündung des Loches 8.

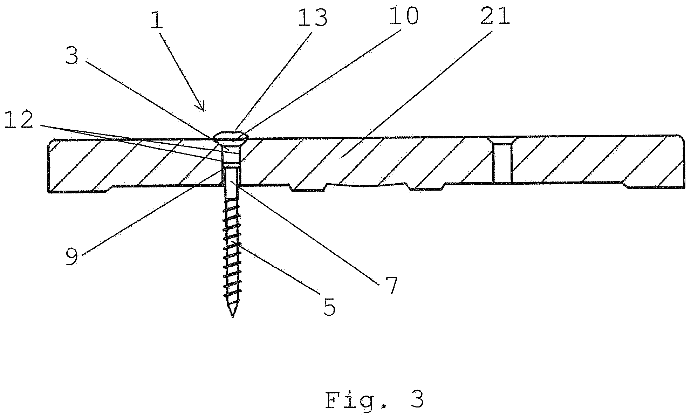

Alle Figuren zeigen, dass die Hülse 3 über ihre Länge unterschiedliche Wandstärke aufweist, nämlich an den Enden 9, 10 eine geringere Wandstärke als im Bereich zwischen den Enden 11, sodass sie eine im Längsschnitt ballige Form aufweist. Diese Form eignet sich vorzüglich für eine erfindungsgemäße Hülse 3. Sie ermöglicht durch ihre schlanken Enden 9, 10 ein leichtes Eingleiten des einen Endes 9 der Hülse 3 in das Loch 8 und eine gute Stülpfähigkeit des kopfnahen 10 Endes. Der verdickte Bereich zwischen den Enden 11 füllt das Loch 8 in Montageendlage, wie Fig. 3 zeigt, bis zur Laibung 12 vollständig aus, wobei das elastomere Material anpassungsfähig ist und auch eine vollständige Auskleidung beispielsweise von ausgebrochenen Löchern ermöglicht.

Die Schraube dringt bis zum Erreichen der Montageendlage, Fig. 3, immer weiter in das Material, z.B. einer Dachplatte ein, während gleichzeitig die Hülse 3 durch den Druck des Kopfes 13 auf die Hülse 3 in das Loch 8 gedrückt wird, bis die Hülse 3 mit dem Bereich zwischen den Enden 11 in der Laibung 12 des Loches 8 sitzt, sich elastisch an der Laibung 12 radial abstützt und dort durch den Druck komprimiert wird. Dann sitzt die Hülse 3 fest in der Laibung 12 des Loches 8. Der nicht in das Loch 8 eindringende Teil der Hülse 3 wird durch den Druck des Kopfes 13 verformt und durch den Kopf 13 nach außen nach Art eines Schirmes umgestülpt, Fig. 3, 4. Die Hülse 3 kann sich dabei auf dem gewindelosen Teil 7 unabhängig von der Bewegung der Schraube parallel zum Schaft 5 bewegen und nimmt an der Drehbewegung der Schraube nicht oder nur geringfügig teil.

Dadurch, dass die Hülse 3 mit Bewegungsspiel auf dem Verbindungsmittel 2 sitzt, kann die Bewegung in axialer Richtung gleichmäßig erfolgen, ohne dass sich die Hülse 3 auf dem Schaft 5 verdreht.

Hierdurch wird ein Verbindungselement 1 bereitgestellt, welches nicht nur die Mündung eines Loches 8 abdeckt, sondern auch, mit dem in dem Loch 8 steckenden Ende 9 der Hülse 3, innerhalb des Loches 8 eine Abdichtung gewährleistet.

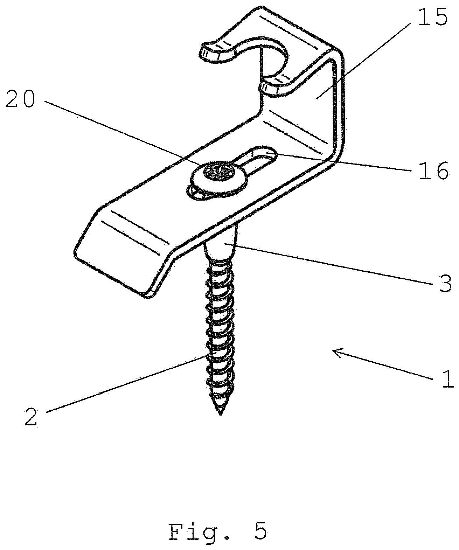

Fig. 5 zeigt das Verbindungselement 1 in einem vormontierten Zustand auf einem Befestigungsmittel, z.B. einer Klammer 15, beispielsweise einer Firstklammer. Die elastomere Hülse 3 kann zusammen mit dem Verbindungsmittel durch die Lochung 16, hier ein Langloch, der Klammer 15 geschoben werden und ist durch ihren dickeren Bereich 11 zwischen den dünnen Enden 9,10 einerseits und den Kopf 13 andererseits verliersicher daran gehalten.

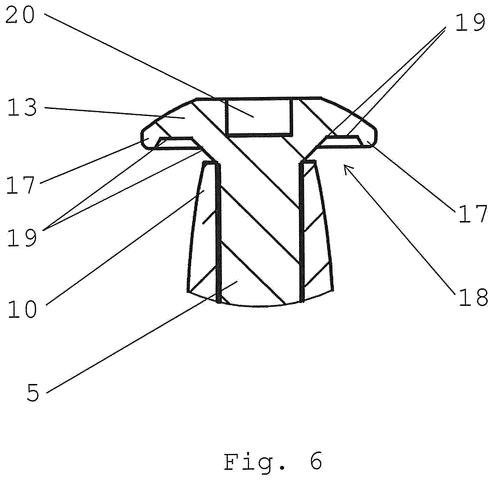

Fig. 6 zeigt das Detail B der Fig. 1, nämlich den Kopf 13 des Verbindungsmittels 2. Dieser weist radial außen eine zum Schaft 5 hin vorragende Kante 17 auf. Sobald die Hülse 3 bei Einschrauben mit dem dickeren Bereich 11 zwischen den Enden 9,10 in das Loch 8 gelangt, verschiebt sich die Hülse 3 auf dem Schaft 5 in axialer Richtung zum Schaft 5, bis sie an die Unterseite 18 des Kopfes 13 stößt. Durch die in Fig. 6 gezeigten schrägen Verlaufsflächen 19 wird das kopfnahe Ende 10 in Richtung der vorragenden Kante 17 geleitet und durch die Kante 17 in Richtung zum Loch 8 umgestülpt wird. Dadurch ist sichergestellt, dass eine optimale Abdichtung erfolgt und zwar oberseitig neben der Lochmündung und radial an der Laibung 12. Der Kopf 13 ist nach Art eines Linsenkopfes ausgebildet. Je nach Anwendungsfall sind unterschiedliche Formen des Kopfes möglich.
Der Kopf 13 weist zudem auf seiner dem Schaft 5 abgewandten Oberseite eine Eingriffskontur 20 für ein Schraubwerkzeug aufweist. Dadurch ist eine einfache Befestigung und Verbindung mit einem entsprechenden Werkzeug möglich.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

## Patentansprüche

1. Verbindungselement (1) zur abgedichteten Verbindung und Befestigung von Gegenständen, bestehend aus einem stiftförmigen Verbindungsmittel (2) mit einem Schaft (5) und einem Kopf (13) und einem auf dem Schaft (5) angeordneten Dichtungsmittel, **dadurch gekennzeichnet, dass** das Dichtungsmittel eine Hülse (3) aus elastomerem Material ist, die einen zylindrischen Durchgangskanal (4) aufweist, der vom Schaft (5) durchgriffen ist, und dass die Hülse (3) über ihre Länge unterschiedliche Wandstärke aufweist, nämlich an den Enden (9, 10) eine geringere Wandstärke als im Bereich (11) zwischen ihren Enden.

2. Verbindungselement nach Anspruch 1, **dadurch gekennzeichnet, dass** das stiftförmige Verbindungsmittel (2) ein Nagel ist.

3. Verbindungselement nach Anspruch 1, **dadurch gekennzeichnet, dass** das stiftförmige Verbindungsmittel (2) eine Schraube ist.

4. Verbindungselement nach Anspruch 3, **dadurch gekennzeichnet, dass** der Schaft (5) der Schraube im dem Kopf (13) nahen Bereich einen gewindelosen Teil (7) aufweist und zwar in einer Länge die gleich oder größer ist als die Hülsenlänge.

5. Verbindungselement nach Anspruch 4, **dadurch gekennzeichnet, dass** das Gewinde (6) der Schraube über den gewindelosen Teil (7) radial vorragt und zumindest das dem Gewinde (6) benachbarte Ende (9) der Hülse (3) oder auch das dem Kopf (13) benachbarte Ende (10) der Hülse (3) eine solche Wandstärke hat, dass der Außenmantel des Hülsenendes mit dem Gewinde (6) fluchtet, während der Bereich (11) zwischen den Enden der Hülse (3) über das Gewinde (6) radial vorragt.

6. Verbindungselement nach einem der Ansprüche 1 bis 5, **dadurch gekennzeichnet, dass** die Hülse (3) im Längsschnitt ballig ist.

7. Verbindungselement nach einem der Ansprüche 1 bis 5, **dadurch gekennzeichnet, dass** die Hülse (3) im Längsschnitt trapezballig ist.

8. Verbindungselement nach einem der Ansprüche 1 bis 5, **dadurch gekennzeichnet, dass** die Hülse (3) im Längsschnitt elliptisch ist.

9. Verbindungselement nach einem der Ansprüche 1 bis 5, **dadurch gekennzeichnet, dass** die Hülse (3) im Längsschnitt ein sich zu den Enden (9, 10) hin verjüngender Doppelkonus ist.

10. Verbindungselement nach einem der Ansprüche 1 bis 5, **dadurch gekennzeichnet, dass** die Hülse (3) im Längsschnitt von den Enden (9, 10) zum Bereich zwischen den Enden (11) stufenartig verdickt ist.

11. Verbindungselement nach Anspruch 10, **dadurch gekennzeichnet, dass** mindestens eine Stufe eine abgerundete oder abgeschrägte Kante aufweist.

12. Verbindungsmittel nach einem der Ansprüche 1 bis 11, **dadurch gekennzeichnet, dass** die Hülse (3) mit Bewegungsspiel auf dem Schaft (5) und/oder dessen gewindelosem Teil (7) angeordnet ist.

13. Verbindungselement nach einem der Ansprüche 1 bis 12, **dadurch gekennzeichnet, dass** der Kopf (13) radial außen eine zum Schaft (5) hin vorragende Kante (17) aufweist.

14. Verbindungselement nach einem der Ansprüche 1 bis 12, **dadurch gekennzeichnet, dass** die Unterseite (18) des Kopfes (13) eine umlaufende Nut oder Rille aufweist.

15. Verbindungselement nach einem der Ansprüche 1 bis 14, **dadurch gekennzeichnet, dass** der Kopf (13) nach Art eines Linsenkopfes geformt ist.

## Claims

1. A connecting element (1) for sealing connection and attachment of objects, consisting of a pin-shaped linking means (2) having a shaft (5) and a head (13) and a sealing means disposed on said shaft (5), **characterized by that** the sealing means is a sleeve (3) of an elastomeric material that includes a cylindrical passage channel (4) penetrated by the shaft (5), and that the sleeve (3) has a differing wall thickness over its length, namely at the ends (9, 10) a smaller wall thickness than in the region (11) between its ends.

2. The connecting element according to claim 1, **characterized by that** the pin-shaped linking means (2) is a nail.

3. The connecting element according to claim 1, **characterized by that** the pin-shaped linking means (2) is a screw.

4. The connecting element according to claim 3, **characterized by that** the shaft (5) of the screw includes in the region close to the head (13) a portion (7) without thread and that in a length that is equal to or larger than the length of the sleeve.

5. The connecting element according to claim 4, **characterized by that** the thread (6) of the screw radially projects beyond the portion (7) without thread, and at least the end (9) of the sleeve (3) adjacent to the thread (6) or also the end (10) of the sleeve (3) adjacent to the head (13) has such a wall thickness that the outer surface of the end of the sleeve is flush with the thread (6), while the region (11) between the ends of the sleeve (3) radially projects beyond the thread (6).

6. The connecting element according to one of claims 1 to 5, **characterized by that** the sleeve (3) has a crowned longitudinal section.

7. The connecting element according to one of claims 1 to 5, **characterized by that** the sleeve (3) has a trapezoidally crowned longitudinal section.

8. The connecting element according to one of claims 1 to 5, **characterized by that** the sleeve (3) has an elliptical longitudinal section.

9. The connecting element according to one of claims 1 to 5, **characterized by that** the sleeve (3) has a longitudinal section of a double cone tapering toward the ends (9, 10).

10. The connecting element according to one of claims 1 to 5, **characterized by that** the sleeve (3) has a longitudinal section stepwise thickening from the ends (9, 10) to the region (11) between the ends.

11. The connecting element according to claim 10, **characterized by that** at least one step includes a rounded or beveled edge.

12. The connecting element according to one of claims 1 to 11, **characterized by that** the sleeve (3) is disposed with movement play on the shaft (5) and/or the portion (7) thereof without thread.

13. The connecting element according to one of claims 1 to 12, **characterized by that** the head (13) includes radially outside an edge (17) projecting toward the shaft (5).

14. The connecting element according to one of claims 1 to 12, **characterized by that** the bottom side (18) of the head (13) includes a peripheral groove or furrow.

15. The connecting element according to one of claims 1 to 14, **characterized by that** the head (13) is shaped as an oval head.

## Revendications

1. Élément de liaison (1) pour liaison et fixation étanche d'objets, consistant en un moyen de liaison (2) en forme de broche ayant une tige (5) et une tête (13) et un moyen d'étanchéité disposé sur la tige (5), **caractérisé en ce que** le moyen d'étanchéité est une douille (3) en un matériau élastomérique qui comporte un canal de passage (4) cylindrique dans lequel passe la tige (5), et que la douille (3) a une épaisseur de paroi variable sur sa longueur, c'est-à-dire aux extrémités (9, 10) une épaisseur de paroi inférieure à celle dans la région (11) entre ses extrémités.

2. Élément de liaison selon la revendication 1, **caractérisé en ce que** le moyen de liaison (2) en forme de broche est un clou.

3. Élément de liaison selon la revendication 1, **caractérisé en ce que** le moyen de liaison (2) en forme de broche est une vis.

4. Élément de liaison selon la revendication 3, **caractérisé en ce que** la tige (5) de la vis comporte dans la région près de la tête (13) une partie (7) non filetée et cela en une longueur qui est supérieure ou égale à la longueur de la douille.

5. Élément de liaison selon la revendication 4, **caractérisé en ce que** le filet (6) de le vis fait saillie radialement au-delà de la partie (7) non filetée, et au moins l'extrémité (9) de la douille (3) voisine au filet (6) ou aussi l'extrémité (10) de la douille (3) voisine à la tête (13) a une telle épaisseur de paroi que la surface extérieure de l'extrémité de la douille soit alignée avec le filet (6), tandis que la région (11) entre les extrémités de la douille (3) fait saillie radialement au-delà du filet (6).

6. Élément de liaison selon une des revendications 1 à 5, **caractérisé en ce que** la douille (3) a une section longitudinale bombée.

7. Élément de liaison selon une des revendications 1 à 5, **caractérisé en ce que** la douille (3) a une section longitudinale trapézoïdalement bombée.

8. Élément de liaison selon une des revendications 1 à 5, **caractérisé en ce que** la douille (3) a une section longitudinale elliptique.

9. Élément de liaison selon une des revendications 1 à 5, **caractérisé en ce que** la douille (3) a une section longitudinale à double cône effilée vers les extrémités (9, 10).

10. Élément de liaison selon une des revendications 1 à 5, **caractérisé en ce que** la douille (3) a une section longitudinale épaissie par paliers à partir des extrémités (9, 10) vers la région (11) entre les extrémités.

11. Élément de liaison selon la revendication 10, **caractérisé en ce qu'**au moins un palier comporte une arête arrondie ou biseautée.

12. Élément de liaison selon une des revendications 1 à 11, **caractérisé en ce que** la douille (3) est disposée avec jeu de mouvement sur la tige (5) et/ou la partie (7) non filetée de celle-ci.

13. Élément de liaison selon une des revendications 1 à 12, **caractérisé en ce que** la tête (13) comporte radialement à l'extérieur une arête (17) faisant saillie vers la tige (5).

14. Élément de liaison selon une des revendications 1 à 12, **caractérisé en ce que** le côté inférieur (18) de la tête (13) comporte une rainure ou strie périphérique.

15. Élément de liaison selon une des revendications 1 à 14, **caractérisé en ce que** la tête (13) est en forme d'une tête bombée.
